# EUROPEAN PATENT SPECIFICATION

(11) **EP 0 774 061 B1**
(45) Date of publication and mention of the grant of the patent: **12.08.1998**
(21) Application number: 94900766.0
(22) Date of filing: 02.11.1993
(51) Int. Cl.: F02F 7/00, F16M 1/08, F16C 5/00

(54) **A TWO-STROKE INTERNAL COMBUSTION ENGINE OF THE CROSSHEAD TYPE**
ZWEITAKT KREUZKOPFBRENNKRAFTMASCHINE
MOTEUR A EXPLOSION A DEUX TEMPS DU TYPE A CROSSE

(30) Priority: 24.11.1992 DK 140792
(43) Date of publication of application: 21.05.1997
(73) Proprietor: MAN B&W DIESEL A/S, 2450 Copenhagen SV (DK)
(72) Inventor: SORENSEN, Ole, DK-2625 Vallensbaek (DK)
(74) Representative: Indahl, Peter Jensen
(86) International application number: DK9300356
(87) International publication number: WO9412784

(56) References cited:
- DK-B- 147 383
- NO-B- 162 636

## Description

The invention relates to a two-stroke internal combustion engine of the crosshead type comprising a bedplate with main bearings for the crankshaft, an A-shaped frame box mounted on the bedplate and having transverse stiffeners supporting guide planes for the crosshead, and a cylinder section clamped together with the bedplate by means of stay bolts extending over part of their length inside hollow profiles formed by the guide planes and by a stiffening connecting the rear side of the guide planes with the transverse stiffening of the A-shaped frame box.

Such an engine is known from Danish patent No. 147 383, where each of the transverse stiffeners of the A-shaped frame box is composed of two trapezoidal frames consisting of an outer and an inner upwardly extending flange which are so interconnected by two parallel plate walls that there is a hollow space inside the frame. The guide planes on each frame are provided on the rear side with a stiffening in the form of a plane plate member extending at an acute angle to the associated plate wall. The two plate walls are further stiffened by an inner vertically extending plate member positioned in alignment with the place where the stiffening of the guide plane is welded to the plate wall. In unison with the adjacent guide planes and the two transverse walls, the inner plate member forms a hollow profile which only extends over the upper section of the A-shaped frame box in the direction of height. A single stay bolt extends down through each hollow profile. It is complicated and expensive to weld on the inner stiffening between the two plate walls of the transverse stiffening, and furthermore, the transverse stiffenings take up a fairly large amount of space in the longitudinal direction of the engine, which contributes to the engine having a large total length. If the engine is to be used as the propulsion engine of a ship, the relatively large installation length of the engine causes the engine room to be long and to take up space, which might otherwise be used for cargo holds.

In the known two-stroke crosshead engines with an A-shaped frame box, the lower ends of the stay bolts are anchored in the bottom of the bedplate of the engine. This anchoring of the stay bolts has been necessary so far to ensure that the engine frame box is capable of absorbing the large forces being transmitted through the stay bolts during the running of the engine, in order to prevent opening of the horizontal surfaces of separation between the cylinder section, the A-shaped frame box and the bedplate.

A two-stroke crosshead engine with an A-shaped frame box is also known, in which the transverse stiffeners of the frame box each is designed as a plate wall positioned in one plane and being interrupted by cylindrical tubes each receiving a stay bolt and extending substantially along the whole height of the A-shaped frame box and the bedplate. The guide planes and the stay bolt tubes are here designed as two separate elements which do not stiffen each other. This design of the transverse stiffening of the frame box is further unsuitable, as about 90 per cent of the flexibility of the stiffening in the transverse direction is inherent in the stay bolt tubes, which thus substantially reduce the transverse rigidity of the stiffening. Furthermore, owing to their large dimension, the stay bolt tubes are expensive to produce.

A small two-stroke crosshead engine with a frame box having a quadrilateral section is also known. The forces to be received in this engine by transverse walls, guide planes, frame box and stay bolts are substantially smaller than the forces occurring in a large two-stroke engine with an A-shaped frame box. The crossheads are here controlled by means of circular segment-shaped vertical sliding surfaces connected with a transverse stiffening in the form of a single-layer wall by means of horizontally extending stiffeners. The stay bolts are relatively small double rods screwed down into threaded holes in the upper side of the bedplate.

The object of the invention is to reduce or remedy the above disadvantages in a large crosshead engine with an A-shaped frame box, and particularly to provide a compact and simply designed A-shaped frame box, where the individual elements of the frame box cooperate to give the frame box a high rigidity and thus to reduce the loads to be transmitted during the running of the engine to the elements to which the A-shaped frame box is connected.

With a view to this, according to one aspect of the invention, the internal combustion engine mentioned in the introduction is characterized in that the guide plane stiffening extends down to the bottom of the transverse stiffening of the A-shaped frame box, and that the lower ends of the stay bolts are fixed in the bedplate in an area positioned on a level above the main bearings.

The ability of the A-shaped frame box to absorb the stresses originating from the stay bolts is improved by the guide plane stiffening extending down to the bottom of the frame box, which also, in consequence of the closed hollow profile, increases the torsional rigidity of the A-shaped frame box in the area around the stay bolts. The suitably high compressive and torsional rigidity of the A-shaped frame box in the area immediately above the bedplate renders it possible, despite the large stay bolt forces, to fix the stay bolts in the upper end of the bedplate, because the high local rigidity of the A-shaped frame box permits such large loads to be applied to the frame box that it is no longer necessary to let the bedplate distribute the reaction forces from the stay bolt fixing over a relatively large section of the frame box. It is thus possible to take advantage of the fact that the bedplate is substantially not stressed by the stay bolt forces, which particularly has the advantage that the bores for the main bearings in the bedplate are not deformed when the stay bolts are tightened.

The local load on the bedplate and the lower section of the A-shaped frame box in the area around the stay bolts may further suitably be reduced by the transverse stiffening of the A-shaped frame box being made as single-layer plate walls, of which at least one plate wall positioned inside the A-shaped frame box carries a guide plane on either side of the wall, which two guide planes with associated stiffening form together with the plate wall two hollow profiles, and by a stay bolt extending inside each of these two hollow profiles. The paired course of two stay bolts either on its side of the plate wall renders it possible to reduce the forces in the individual stay bolt to about half, and at the same time, at either side of the crosshead at each transverse inner stiffening, there are two hollow profiles for receiving compressive forces and moments.

The A-shaped frame box according to the invention is further substantially more simple to manufacture than the previously known A-shaped frame boxes, and it takes up a minimum of space in the longitudinal direction of the engine, and at the same time the transverse stiffeners possess high transverse rigidity.

According to another aspect of the invention, the crosshead engine with an A-shaped frame box mentioned in the introduction is characterized in that the transverse stiffening of the A-shaped frame box is made as single-layer plate walls, of which at least one plate wall positioned inside the A-shaped frame box carries a guide plane on either side of the wall, which two guide planes with associated stiffening form together with the plate wall two hollow profiles, and that a stay bolt extends inside each of these two hollow profiles. As mentioned above, this design entails partly that the stay bolt forces are distributed over the double number of stay bolts, partly that the double number of hollow profiles improves the compressive and torsional rigidity of the transverse stiffeners, partly that the transverse stiffeners are simple to produce and only take up little space in the longitudinal direction of the engine.

As mentioned above, the load of the stay bolts on the bedplate may suitably be reduced by the guide plane stiffening extending down to the bottom of the transverse stiffening of the A-shaped frame box, and by the lower ends of the stay bolts being fixable in the bedplate in an area positioned on a level above the main bearings. This design further improves the ability of the A-shaped frame box to withstand large local stresses in the area around the stay bolts.

The above A-shaped frame box is further simplified by incorporating the stay bolt tubes as an integral part of the stiffening of the guide planes.

The high local rigidity of the A-shaped frame box in the areas around the stay bolts may suitably be increased by the lower and/or the upper end of each guide plane with associated stiffening being rigidly connected to a bottom flange and/or a top flange, respectively, on the associated transverse stiffener of the A-shaped frame box.

An embodiment of the invention will be described below in further detail with reference to the very schematic drawings, in which
Fig. 1 is a cross sectional view through the engine,

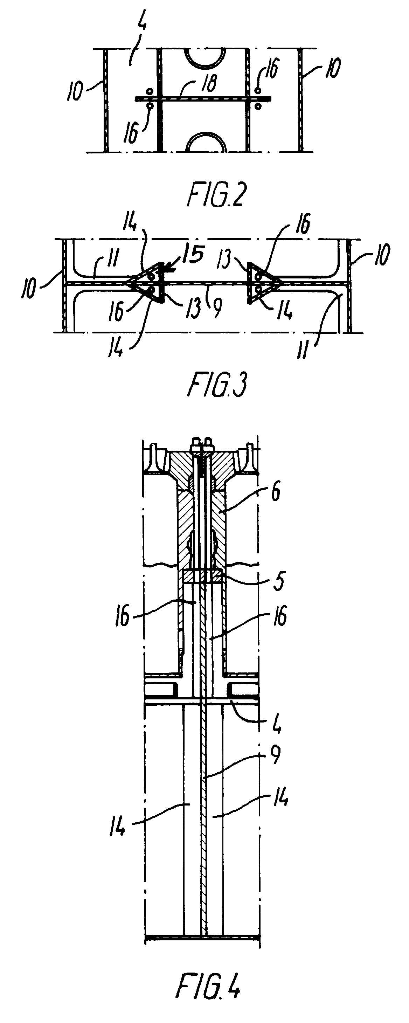

Figs. 2 and 3, on a larger scale and in part, is a sectional view through the engine along the lines II-II and III-III of Fig. 1, respectively, and
Fig. 4, on a larger scale and in part, is a longitudinal sectional view through the engine frame box of the engine in Fig. 1.

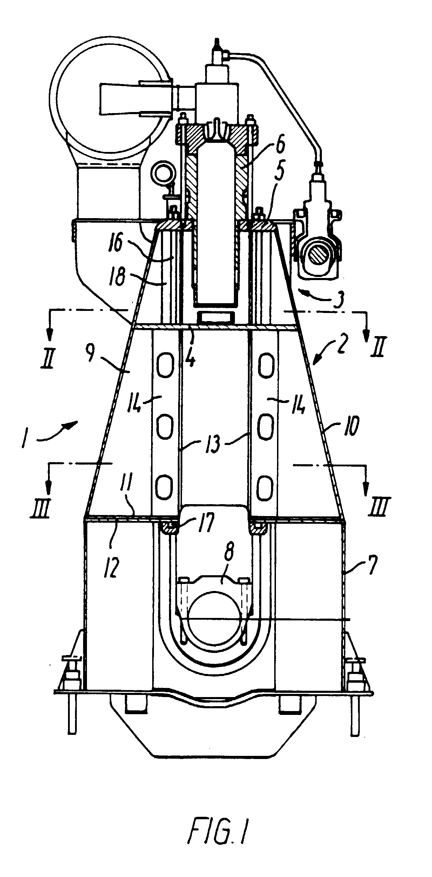

Fig. 1 shows a large two-stroke turbocharged internal combustion engine 1 having an engine frame box 2 with an A-shaped cross section. In the embodiment shown, the A-shaped frame box also comprises a cylinder section generally designated 3 and being positioned between an intermediate bottom 4 and a top plate 5 carrying the cylinder liners 6 of the engine. However, it is also possible to design the cylinder section 3 as one or more separate units, which may have vertical outer walls and be mounted on the top plate of the A-shaped frame box, which, in that case, constitutes the intermediate bottom 4. The A-shaped frame box is mounted on top of the bedplate 7 of the engine, in which main bearings 8 for the crank shaft are mounted.

As best shown in Fig. 3, the A-shaped frame box is stiffened between each cylinder by a through-going plate wall 9 interconnecting the longitudinally extending outer walls 10 of the frame box and extending in the direction of height from the intermediate bottom 4 to two horizontally positioned flange portions 11, with which the A-shaped frame box is bolted together with corresponding flange portions 12 at the upper side of the bedplate. As the plate walls 9 are through-going, they give the A-shaped frame box high transverse rigidity.

Vertical guide planes 13 for receiving the transverse forces acting on the crosshead are mounted on the plate wall 9, for example by means of welding. On either side of the inner plate walls 9, two guide planes 13 are positioned transversely opposite each other. The rear side of each guide plane is supported by a vertically extending stiffening 14 connecting the guide plane with the plate wall 9. As shown, the stiffening 14 may consist of a plane plate member forming an acute angle with the plate wall, but it is also possible to use a stiffening having a horizontally quarter-circular or quarter-elliptical section, which means that the stiffening extends substantially at right angles on to the plate wall 9. The guide plane 13, the stiffening 14 and the plate wall 9 form a hollow profile 15 of high torsional rigidity.

The cylinder section 3 and the bedplate 7 are clamped together by means of stay bolts 16 extending, between the intermediate bottom 4 and the bottom of the A-shaped frame box, inside the hollow profiles 15, which thus function as stay bolt tubes giving the A-shaped frame box the required compressive rigidity to withstand the large, varying compressive forces transmitted to the frame box by the stay bolts, when the engine is in operation. By arranging a stay bolt inside each hollow profile, the ignition forces of each cylinder are distributed over four stay bolts, which reduces the pretensioning force in the individual stay bolt, compared to an embodiment where only two stay bolts are used at each inner plate wall. The design of the transverse stiffening of the A-shaped frame box as a single-layer plate wall, and the incorporation of the guide plane stiffening and the stay bolt tubes into a single unit ensure, partly that the transverse stiffening of the A-shaped frame box does not take up unnecessary space in the longitudinal direction of the engine, partly that the manufacture of the transverse stiffeners may be carried out in a simple manner, as there are only a few elements which may all be assembled by means of external weld seams.

The lower ends of the stay bolts are suitably fixed in threaded holes at the upper side of the bedplate. This entails the advantage that the tensile stresses in the bedplate made by the stay bolts are transmitted directly to the A-shaped frame box, so that the lower bedplate section with the main bearings is not affected by these stresses. As an alternative to threaded holes, the bedplate in the area below each stay bolt may be designed with a recess being in connection with an upwardly extending clearance hole, through which the stay bolt passes. The lower end 17 of the stay bolt may, in that case, be fixed by means of a bolt inserted in the recess. If the stay bolts are fixed at the upper side of the bedplate 7, the A-shaped frame box may be given a suitably high rigidity in the area immediately above the bedplate by the stiffening 14 extending completely down to the flange portion 11. The stiffening 14 may be welded onto the flange portion 11 or may be bolted together with it, so that these two elements are rigidly interconnected. Correspondingly, at its upper end the stiffening 14 may be rigidly connected to the intermediate bottom 4 or to a top flange on the A-shaped frame box.

As the cylinder section 3 is substantially less wide than the bottom of the A-shaped frame box, the required compressive rigidity vis-à-vis the stay bolt forces may suitably be provided by means of a transverse wall 18 extending in the direction of height from the intermediate bottom 4 to the top plate 5. The compressive rigidity in the cylinder section 3 may also be achieved by surrounding the stay bolts by stay bolt tubes in the cylinder section.

If the stay bolts are fixed conventionally at the bottom of the bedplate 7, it is still possible according to the invention to take advantage of the simple design of the transverse stiffening of the A-shaped frame box, even if the stiffening 14 does not extend completely down to the bottom of the A-shaped frame box, but it is preferred, however, to fix the stay bolts at the upper side of the bedplate.

## Claims

1. A two-stroke internal combustion engine (1) of the crosshead type comprising a bedplate (7) with main bearings (8) for the crankshaft, an A-shaped frame box (2) mounted on the bedplate and having transverse stiffeners (9) supporting guide planes (13) for the crosshead, and a cylinder section (3) clamped together with the bedplate by means of stay bolts (16) extending over part of their length inside hollow profiles (15) formed by the guide planes and by a stiffening (14) connecting the rear side of the guide planes with the transverse stiffening of the A-shaped frame box, **characterized** in that the guide plane stiffening (14) extends down to the bottom of the transverse stiffening (9) of the A-shaped frame box (2), and that the lower ends (17) of the stay bolts (16) are fixed in the bedplate (7) in an area positioned on a level above the main bearings (8).

2. A two-stroke internal combustion engine according to claim 1, **characterized** in that the transverse stiffening of the A-shaped frame box is made as single-layer plate walls (9), of which at least one plate wall positioned inside the A-shaped frame box carries a guide plane (13) on either side of the wall, which two guide planes with associated stiffening (14) form together with the plate wall (9) two hollow profiles (15), and that a stay bolt (16) extends inside each of these two hollow profiles.

3. A two-stroke internal combustion engine of the crosshead type comprising a bedplate (7) with main bearings (8) for the crankshaft, an A-shaped frame box (2) mounted on the bedplate and having transverse stiffeners (9) supporting guide planes (13) for the crosshead, and a cylinder section (3) clamped together with the bedplate by means of stay bolts (16) extending over part of their length inside hollow profiles (15) formed by the guide planes and by a stiffening (14) connecting the rear side of the guide planes with the transverse stiffening of the A-shaped frame box,
**characterized** in that the transverse stiffening of the A-shaped frame box is made as single-layer plate walls (9), of which at least one plate wall positioned inside the A-shaped frame box carries a guide plane (13) on either side of the wall, which two guide planes with associated stiffening (14) form together with the plate wall (9) two hollow profiles (15), and that a stay bolt (16) extends inside each of these two hollow profiles.

4. A two-stroke internal combustion engine according to claim 3, **characterized** in that the guide plane stiffening (14) extends down to the bottom of the transverse stiffening (9) of the A-shaped frame box, and that the lower ends (17) of the stay bolts are fixed in the bedplate (7) in an area positioned on a level above the main bearings (8).

5. A two-stroke internal combustion engine according to any one of claims 1, 2 or 4, **characterized** in that the lower end of each guide plane (13) with associated stiffening is rigidly connected to a bottom flange (11) on the associated transverse stiffening of the A-shaped frame box.

6. A two-stroke internal combustion engine according to any one of the preceding claims,
**characterized** in that the upper end of each guide plane (13) with associated stiffening is rigidly connected to a top flange (4) on the associated transverse stiffening of the A-shaped frame box.

## Patentansprüche

1. Zweitakt-Kreuzkopf-Brennkraftmaschine (1) mit einem mit Hauptlagern (8) für die Kurbelwelle versehenen Unterteil (7), mit einem A-förmigen, auf dem Unterteil aufgenommen und mit Querversteifungen (9), welche Führungen (13) für den Kreuzkopf tragen, versehenen Gehäuse (2) und mit einem Zylinderbereich (3), der mit dem Unterteil über Zuganker (16) verspannt ist, die über einen Teil ihrer Länge innerhalb von Hohlprofilen (15) verlaufen, die durch die Führungen und durch eine Versteifung (14), welche die Rückseite der Führungen mit der Querversteifung des A-förmigen Gehäuses verbindet, gebildet werden, **dadurch gekennzeichnet, daß** sich die Führungsversteifungen (14) bis zum unteren Ende der Querversteifung (9) des A-förmigen Gehäuses (2) erstrecken und daß die unteren Enden (17) der Zuganker (16) im Unterteil (7) in einem oberhalb der Hauptlager (8) gelegenen Bereich fixiert sind.

2. Zweitakt-Kreuzkopf-Brennkraftmaschine nach Anspruch 1, **dadurch gekennzeichnet, daß** die Querversteifung des A-förmigen Gehäuses durch einlagige Wandplatten (9) gebildet wird, von denen wenigstens eine innerhalb des A-förmigen Gehäuses angeordnete Wandplatte auf beiden Seiten eine Führung (13) trägt, wobei zwei solche Führungen (13) samt den zugeordneten Versteifungen (14) zusammen mit der Wandplatte (9) zwei Hohlprofile (15) bilden, und daß innerhalb eines jeden dieser Hohlprofile (15) ein Zuganker (16) verläuft.

3. Zweitakt-Kreuzkopf-Brennkraftmaschine mit einem mit Hauptlagern (8) für die Kurbelwelle versehenen Unterteil (7), mit einem A-förmigen, auf dem Unterteil aufgenommen und mit Querversteifungen (9), welche Führungen (13) für den Kreuzkopf tragen, versehenen Gehäuse (2) und mit einem Zylinderbereich (3), der mit dem Unterteil über Zuganker (16) verspannt ist, die über einen Teil ihrer Länge innerhalb von Hohlprofilen (15) verlaufen, die durch die Führungen und durch eine Versteifung (14), welche die Rückseite der Führungen mit der Querversteifung des A-förmigen Gehäuses verbindet, gebildet werden, **dadurch gekennzeichnet, daß** die Querversteifung des A-förmigen Gehäuses durch einlagige Wandplatten (9) gebildet wird, von denen wenigstens eine innerhalb des A-förmigen Gehäuses angeordnete Wandplatte auf beiden Seiten eine Führung (13) trägt, wobei zwei solche Führungen (13) samt den zugeordneten Versteifungen (14) zusammen mit der Wandplatte (9) zwei Hoh!profile (15) bilden, und daß innerhalb eines jeden dieser Hohlprofile (15) ein Zuganker (16) verläuft.

4. Zweitakt-Kreuzkopf-Brennkraftmaschine nach Anspruch 3, **dadurch gekennzeichnet, daß** sich die Führungsversteifungen (14) bis zum unteren Ende der Querversteifung (9) des A-förmigen Gehäuses erstrecken und daß die unteren Enden (17) der Zuganker im Unterteil (7) in einem oberhalb der Hauptlager (8) gelegenen Bereich fixiert sind.

5. Zweitakt-Kreuzkopf-Brennkraftmaschine nach einem der Ansprüche 1, 2 oder 4, **dadurch gekennzeichnet, daß** das untere Ende jeder Führung (13) samt der jeweils zugeordneten Versteifung fest mit einem Bodenflansch (11) der zugeordneten Querversteifung des A-förmigen Gehäuses verbunden ist.

6. Zweitakt-Kreuzkopf-Brennkraftmaschine nach einem der vorhergehenden Ansprüche, **dadurch gekennzeichnet, daß** das obere Ende jeder Führung (13) samt der jeweils zugeordneten Versteifung fest mit einem Kopfflansch (4) der zugeordneten Querversteifung des A-förmigen Gehäuses verbunden ist.

## Revendications

1. Moteur (1) à combustion interne deux-temps du type à crosse, comprenant une embase (7) avec roulements principaux (8) pour le vilbrequin, un caisson (2) en forme d'A monté sur l'embase et comportant des renforts transversaux (9) de support de plans de guidage (13) de la crosse, et un ensemble cylindre (3) resserré sur l'embase à l'aide de tirants boulonnés (16) qui, sur une partie de leur longueur, s'étendent à l'intérieur de profilés creux (15) formés par les plans de guidage et par un renfort (14) reliant la face postérieure des plans de guidage au renfort transversal du caisson en forme d'A, **caractérisé** en ce que le renfort (14) de plan de guidage s'étend jusqu'au bas du renfort transversal (9) du caisson (2) en forme d'A et en ce que les extrémités inférieures (17) des tirants boulonnés (16) sont fixées sur l'embase (7) dans une zone située à un niveau au dessus des roulements principaux (8).

2. Moteur à combustion interne deux-temps selon la revendication 1, **caractérisé** en ce que le renfort transversal du caisson en forme d'A est conçu sous la forme de parois (9) en plaque à une seule couche, dont au moins une plaque de paroi située à l'intérieur du caisson en forme d'A porte un plan de guidage (13) de part et d'autre de la paroi, lesquels deux plans de guidage avec renfort associé (14) forment, avec la plaque de paroi (9), deux profilés creux (15), et en ce qu'un tirant boulonné (16) s'étend à l'intérieur de chacun de ces deux profilés creux.

3. Moteur à combustion interne deux-temps du type à crosse, comportant une embase (7) avec roulements principaux (8) pour le vilbrequin, un caisson (2) en forme d'A monté sur l'embase et comportant des renforts transversaux (9) de support de plans de guidage (13) de la crosse, et un ensemble cylindre (3) resserré sur l'embase à l'aide de tirants boulonnés (16) qui, sur une partie de leur longueur, s'étendent à l'intérieur de profilés creux (15) formés par les plans de guidage et par un renfort (14) reliant la face postérieure des plans de guidage au renfort transversal du caisson en forme d'A, **caractérisé** en ce que le renfort transversal du caisson en forme d'A est conçu sous la forme de parois (9) en plaque à une seule couche, dont au moins une plaque de paroi située à l'intérieur du caisson en forme d'A porte un plan de guidage (13) de part et d'autre de la paroi, lesquels deux plans de guidage avec renfort associé (14) forment, avec la plaque de paroi (9), deux profilés creux (15), et en ce qu'un tirant boulonné (16) s'étend à l'intérieur de chacun de ces deux profilés creux.

4. Moteur à combustion interne deux-temps selon la revendication 3, **caractérisé** en ce que le renfort (14) de plan de guidage s'étend jusqu'au bas du renfort transversal (9) du caisson en forme d'A et en ce que les extrémités inférieures (17) des tirants boulonnés sont fixés sur l'embase dans une zone située à un niveau au dessus des roulements principaux (8).

5. Moteur à combustion interne deux-temps selon l'une quelconque des revendications 1, 2 ou 4,
**caractérisé** en ce que l'extrémité inférieure de chacun des plans de guidage (13) avec renfort associé est relié de façon rigide à un rebord inférieur (11) du renfort transversal associé du caisson en forme d'A.

6. Moteur à combustion interne deux-temps selon l'une quelconque des revendications précédentes,
**caractérisé** en ce que l'extrémité supérieure de chacun des plans de guidage (13) avec renfort associé est relié de façon rigide à un rebord supérieur (4) du renfort transversal associé du caisson en forme d'A.
